# EUROPEAN PATENT SPECIFICATION

(11) **EP 3 073 878 B1**
(45) Date of publication and mention of the grant of the patent: **31.01.2018**
(21) Application number: 14798733.3
(22) Date of filing: 03.11.2014
(51) Int. Cl.: A47J 42/38, A47J 42/50, A47J 42/56

(54) **GRINDER FOR AUTOMATIC COFFEE MACHINE**
MAHLWERK FÜR AUTOMATISCHE KAFFEEMASCHINE
MOULIN POUR MACHINE À CAFÉ AUTOMATIQUE

(30) Priority: 26.11.2013 IT MI20131974
(43) Date of publication of application: 05.10.2016
(73) Proprietor: De'Longhi Appliances S.r.l., 31100 Treviso (IT)
(72) Inventor: DE' LONGHI, Giuseppe, 31100 Treviso (IT); EVANGELISTI, Paolo, 40138 Bologna (IT); SARTORI, Eros, 31052 Maserada Sul Piave (Treviso) (IT)
(74) Representative: Rapisardi, Mariacristina
(86) International application number: PCT/EP2014/073551
(87) International publication number: WO 2015/078662

(56) References cited:
- AU-A1- 2009 202 486
- US-A1- 2011 163 131
- US-A1- 2013 095 218

## Description

The present invention relates to a grinder for an automatic coffee machine and an automatic coffee machine that has such a grinder.

A grinder of the known type is equipped with an internal grinder and an external grinder that delimit an adjustable gap, and a hopper having an opening for unloading the coffee beans in the gap where the coffee beans are ground.

In a grinder of the known type, within the hopper, at the unloading opening, a safety device is provided that prevents the user from directly accessing the sharp parts, known as a finger guard, which can assume different embodiments.

Some hoppers of the known type have very inclined walls that allow the coffee beans to descend by gravity. Hoppers of this type, for the same capacity, obviously have a larger height dimension which sometimes limits their field of use.

Other hoppers of the known type, so as to maintain a limited height dimension, for the same capacity, have less inclined walls. In hoppers of this type the coffee beans would not descend towards the gap by gravity, therefore the grinder must be equipped with a generator of vibrations transmittable directly or indirectly to the hopper itself. In this case the finger guard device is generally a fixed element that can also be afforded integral with the hopper. Such a solution adopted for the descent of the coffee beans implies negative effects on the operation of the entire coffee machine connected with the vibrations but also with the resulting sound emissions amplified by the hopper which acts as a loudspeaker.

In other hoppers of the known type which have less inclined walls so as to limit the height dimension for the same capacity, the problem of the descent of the beans is solved in a different way, i.e. by sacrificing the vibration generator and providing a rotatable finger guard device equipped with coffee bean movement organs. In such solutions, there is the drawback that when the coffee beans run out, the first coffee beans topped up by the user may impact against the finger guard device when it is rotating and can therefore be thrown out of the hopper hence wasting material and also creating a potential risk for the actual user.

US2011/163131, US2013/095218 and AU2009202486 disclose a grinder according to preamble of claim 1.

The technical task of the present invention is, therefore, to provide a grinder for an automatic coffee machine which obviates the above-described technical drawbacks of the prior art.

Within the scope of this technical task an object of the invention is to provide a grinder for an automatic coffee machine that is safe for the user, silent, compact and simple to build.

A further object of the invention is to fashion a grinder for an automatic coffee machine that is particularly suitable for a hopper with a reduced vertical dimension.

The technical task, as well as these and other objects, according to the present invention, are reached by providing a grinder for an automatic coffee machine, comprising an internal grinder and an external grinder separated by a gap, a hopper equipped with an opening for unloading the coffee beans in said gap in order to perform the grinding, and a finger guard impeller positioned at said unloading opening of the hopper and having organs for moving the coffee beans, characterised in that there are interception means of the impeller configured and arranged to limit its angle of rotation.

The present invention also relates to an activation method of a grinder of a coffee machine comprising an internal grinder and an external grinder separated by a gap, a hopper equipped with an opening for unloading the coffee beans in said gap in order to perform the grinding, and a finger guard impeller positioned at said unloading opening and having movement organs of the coffee beans, characterised in that it couples the impeller by friction with a rotation shaft of the internal grinder, activates in rotation said shaft so that, through said friction coupling, said impeller is caused to rotate through an angle of rotation at least sufficient to complete the unloading of the coffee beans by the movement organs, and intercepts the impeller upon the completion of said angle of rotation in order to stop its rotation so as to allow the reintegration of coffee beans into the hopper without the risk of them being discharged, also in the event that the reintegration takes place when the rotation shaft of the internal grinder is in rotation.

Therefore, according to an advantageous aspect of the invention the impeller is supported by the rotation shaft of the internal grinder but its rotation can be decoupled from that of the rotation shaft of the internal grinder.

In practice the impeller can be activated in rotation by the rotation shaft of the internal grinder for a determined angle of rotation necessary to complete the unloading of the coffee beans from the hopper by the movement organs, to then be stopped by the interception means once said angle of rotation is complete.

Other characteristics of the present invention are also defined in the claims which follow.

Further characteristics and advantages of the invention will more fully emerge from the description of a preferred but not exclusive embodiment of the grinder for an automatic coffee machine according to the invention, illustrated by way of nonlimiting example in the accompanying drawings, in which:

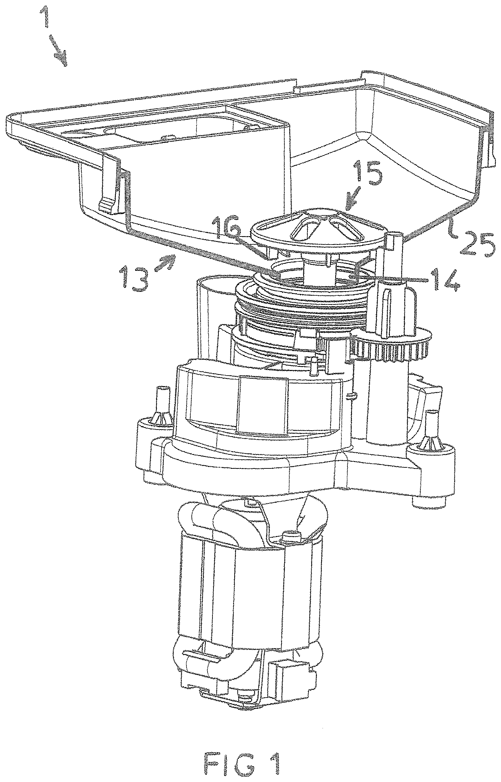

Figure 1 shows a perspective view of the grinder with the hopper sectioned;

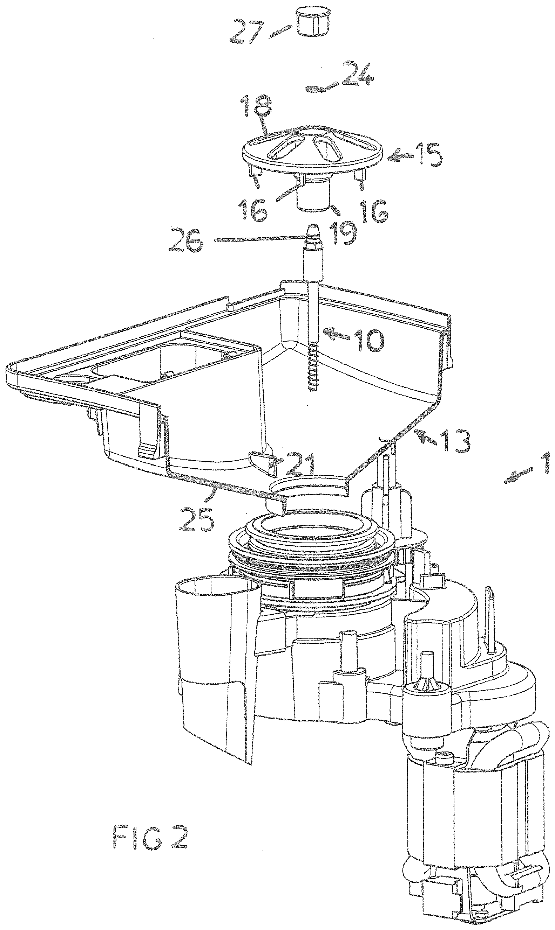

Figure 2 shows an exploded perspective view of the grinder of figure 1 with the hopper sectioned;

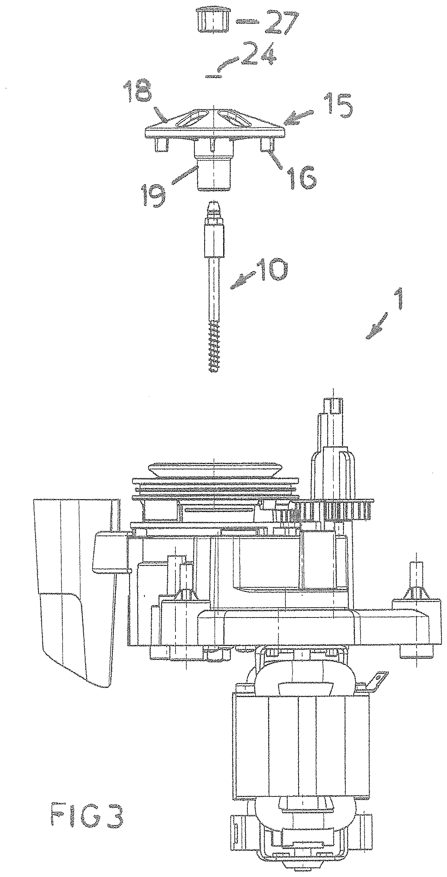

Figure 3 shows an exploded side raised view of the grinder of figure 1 without the hopper;

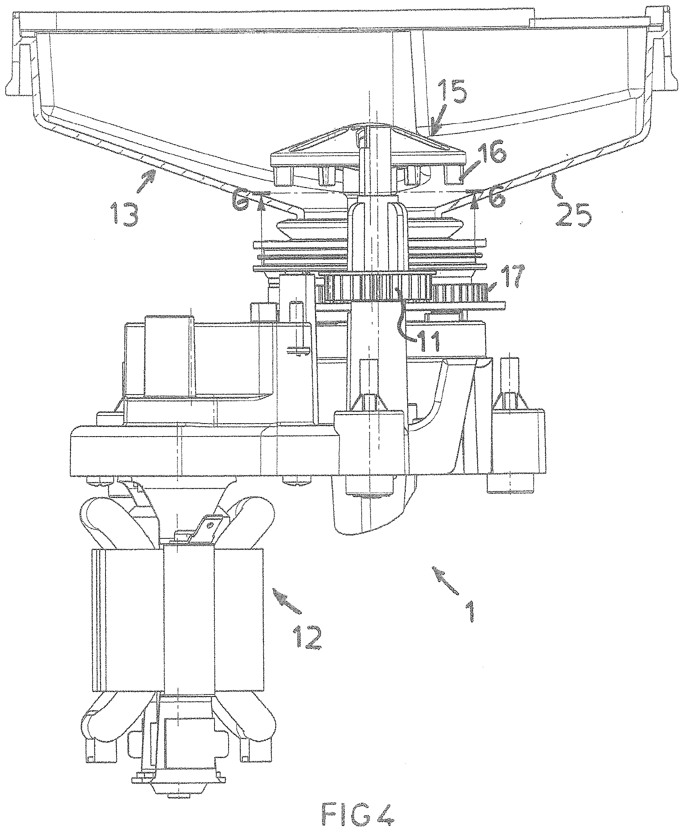

Figure 4 shows a side raised view of the grinder of figure 1 with the hopper sectioned;

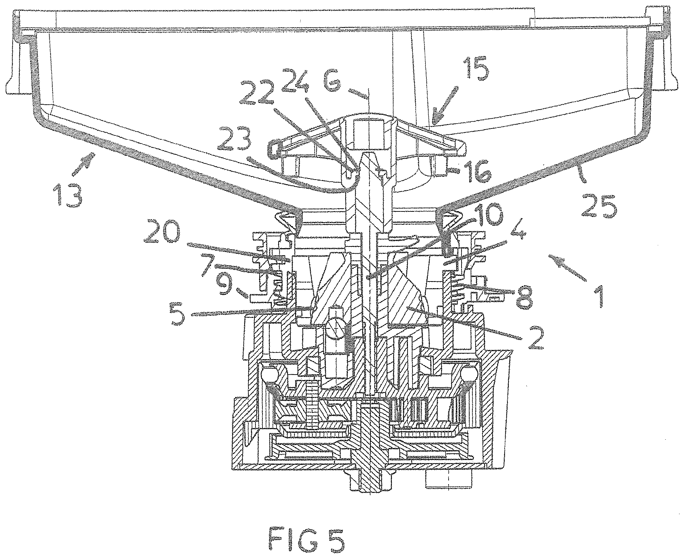

Figure 5 is an axially sectioned view of the grinder of figure 1;

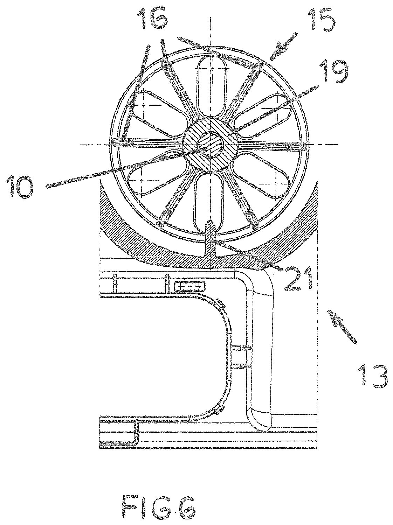

Figure 6 is a detailed view of the grinder sectioned according to plane 6-6 of figure 4.

With reference to the figures mentioned, a grinder for an automatic coffee machine is shown indicated overall with the reference number 1.

The grinder 1 comprises, in compliance with the prior art, an internal grinder 2 and an external grinder 4 coaxial with respect to an axis 6 and delimiting a gap 5, which determines the particle size, where the grinding is performed.

The internal grinder 2 can be activated in rotation about the axis 6 through a rotation shaft 10 connected to a motor 12.

An adjustment ring 9 for adjusting the gap 5 is operatively engaged with the external grinder 4 to make it translate parallel to the axis 6 so as to be able to change the width of the gap 5 itself.

In particular a tooth 7 projecting radially from the outer perimeter of a support cup 20 of the external grinder 4 engages in a cam profile 8 present along the inner lateral wall of the adjustment ring 9 which in turn has an outer toothing 17 meshing with a toothed wheel 11 of a reduction connected to the motor 12.

One of the grinders, in particular the internal one 2, can also have, in compliance with the prior art, a clutch (not shown) that is detached from the relative motor when a moment of a rolling friction force is created which stops their mutual rotation.

The grinder 1 also comprises a hopper 13 equipped on the bottom 25 with an opening 14 for unloading coffee beans in the gap 5 for performing the grinding, and a finger guard impeller 15 positioned at the unloading opening 14 of the hopper 13 and having organs 16 for moving the coffee beans.

The hopper 13 has a reduced vertical dimension, for the same capacity, since the inclination of the bottom is comprised between 15° and 25°, preferably between 19° and 22°.

Naturally the possibility of the inclination of the bottom of the hopper being different in other applications is not excluded, particularly being greater than the inclination indicated above.

Advantageously the grinder 1 has interception means for intercepting the impeller 15 configured and arranged to limit its angle of rotation.

The interception means are preferably envisaged on the inner side of the hopper 13.

The impeller 15 comprises a covering element 18 of the unloading opening 14 supported by a hub 18 fitted onto the rotation shaft 10 of the internal grinder 2 which in turn extends through the unloading opening 14.

The movement organs 16 project from the side of the covering element 18 facing the unloading opening 14.

The covering element 18, the hub 19 and the movement organs 16 are preferably fashioned in a single piece.

The interception means comprise a protrusion 21 that intersects the trajectory performed by one of the movement organs 16 when the impeller 15 is activated in rotation.

The interception means are preferably made integral with the hopper 13.

The covering element 18 has a cone shape having concavity facing the unloading opening 14 and oriented coaxially to the hub 19.

The movement organs 16 are positioned along the base perimeter of the conical covering element 18.

The movement organs 16 follow one another along the base perimeter of the conical covering element 18 at an angular distance from each another, referring to the axis of the hub 19, of no more than 90°, and at a certain distance from the bottom of the hopper 13.

By way of example, six movement organs 16 are provided, angularly spaced out equally by an angle of 60°.

The movement organs 16 have a flattened conformation and are arranged with their main lying plane radially facing the axis of the impeller 15 at the same radial distance from the latter.

The vertical projection of the movement organs 16 is at points on the bottom of the hopper 13 adjacent to the unloading opening 14.

The protrusion 21, with a flattened shape, develops on the bottom of the hopper 13 and is arranged with its main lying plane oriented radially to the axis of the impeller 13.

The hub 19 has a friction coupling with the rotation shaft 10 such as to allow the latter to activate the impeller 15 in rotation on itself in the absence of a moment of a force that opposes the rotation of the impeller 15 or while this potential moment remains below a certain threshold value.

The hub 19 has an inner flange 22 resting on a shoulder 23 of the rotation shaft 6 and stopped by an elastic element 24 engaged in a perimetric groove 26 of the rotation shaft 6 in order to stop the axial withdrawal of the impeller 15 from the rotation shaft 6. This elastic element 24, shown here in the form of a ring, can assume various other embodiments including a bush with retaining teeth.

The hub 19 is also open at its upper end to allow the engagement of the lock ring 24 in the groove 26, and is equipped with a closing plug 27 of its upper end applicable after the engagement of the lock ring 24 in the groove 26.

The operation of the grinder is briefly as follows.

Initially the hopper 13 is filled with the coffee beans.

The initial quantity of coffee beans is sufficient to generate on the impeller 15 a moment of a force that opposes the rotation of the impeller 15 and that initially prevails over the moment of the friction coupling force of the impeller 15 at the rotation shaft 10. Therefore, in this step the impeller 15 remains still even when the shaft 10 is activated in rotation.

When the hopper 13 reaches an advanced degree of emptying, the few remaining coffee beans generate a moment of a force on the impeller 15 that cannot prevail over the moment of the friction coupling force of the impeller at the rotation shaft 10. Therefore, in this situation the impeller 15 can be activated in rotation by the shaft 10. Hence, when the shaft 10 is activated in rotation, the impeller 15 rotates too and consequently the movement organs 16 move the coffee beans that are hence conveyed towards the unloading opening 14.

Upon completion of an angle of rotation of the impeller 15 that is at least sufficient to complete the unloading of the coffee beans, one of the movement organs 16 impacts against the protrusion 21 that therefore prevents the impeller 15 from continuing the rotation further.

Therefore, in this situation the impeller 15 would remain still even if the rotation shaft 10 continued its rotation.

Consequently, when the user decides to top up the coffee beans in the hopper 13, if this happens exactly when the shaft 10 is in rotation, the impeller 15 remains still anyway and hence the first coffee beans, by impacting against the stationary impeller 15, settle in the hopper 13 instead of bouncing out of it.

The grinder in accordance with the invention provides various advantages since it allows the coffee beans to be topped up in complete safety for the user, and ensures the complete descent of the coffee beans through a movement system within the hopper that can hence be completely free from the grinder.

The construction of the grinder is simplified since a dual function is associated with the rotation shaft of the internal grinder that also acts as a support and rotation shaft for the impeller.

The grinder for an automatic coffee machine as conceived herein is susceptible to many modifications and variations, all falling within the scope of the invented concept; furthermore, all the details are replaceable by technically equivalent elements.

The materials used, as well as the dimensions, may in practice be of any type according to requirements and the state of the art.

## Claims

1. A grinder (1) for an automatic coffee machine, comprising an internal grinder (2) and an external grinder (4) separated by a gap (5), a hopper (13) equipped with an opening (14) for unloading the coffee beans in said gap (5) in order to perform the grinding, and finger guard impeller (15) positioned at said unloading opening (14) and having organs (16) for moving the coffee beans, **characterised in that** there are interception means of the impeller (15) configured and arranged to limit its angle of rotation.

2. The grinder (1) for an automatic coffee machine according to the preceding claim, **characterised in that** said impeller (15) comprises a covering element (18) of said unloading opening (14) having a hub (19) fitted onto a rotation shaft (10) of said internal grinder (2).

3. The grinder (1) for an automatic coffee machine according to the preceding claim, **characterised in that** said hub (19) has a friction coupling with said rotation shaft (10) such as to cause the rotation of the impeller (15) by said rotation shaft (10) until the value of any movement that opposes the rotation of the impeller (15) is below a certain threshold.

4. The grinder (1) for an automatic coffee machine according to any one of the preceding claims, **characterised in that** said interception means are present on the internal side of said hopper (13).

5. The grinder (1) for an automatic coffee machine according to the preceding claim, **characterised in that** said interception means comprise a protrusion (21) in the hopper (13) which intersects the trajectory performed by one of said movement organs (16) when the impeller is activated in rotation.

6. The grinder (1) for an automatic coffee machine according to any one of claims 4 and 5, **characterised in that** said interception means are made integral with said hopper (13).

7. The grinder (1) for an automatic coffee machine according to any one of claims 2 to 6, **characterised in that** said movement organs (16) project from the side of the covering element (18) facing said unloading opening (14).

8. The grinder (1) for an automatic coffee machine according to any one of claims 2 to 7, **characterised in that** said covering element (18) has a conical shape.

9. The grinder (1) for an automatic coffee machine according to the preceding claim, **characterised in that** said movement organs (16) are positioned along the base perimeter of said conical covering element (18).

10. The grinder (1) for an automatic coffee machine according to the preceding claim, **characterised in that** said movement organs (16) follow one another along the base perimeter of said conical covering element (18) at an angular distance from each other, in relation to the axis of the hub (19), of no more than 90°.

11. The grinder (1) for an automatic coffee machine according to any one of claims 2 to 10, **characterised in that** said hub (19) has an internal flange (22) resting on a shoulder (23) of the rotation shaft (6) and locked by an elastic element (24) engaged in a perimetric groove (26) of the rotation shaft (10) in order to stop the axial withdrawal of the impeller (15) from the rotation shaft (10).

12. A coffee machine **characterised in that** it comprises a grinder (1) according to any one of the preceding claims.

13. An activation method of a grinder of a coffee machine comprising an internal grinder (2) and an external grinder (4) separated by a gap (5), a hopper (13) equipped with an opening (14) for unloading the coffee beans in said gap (5) in order to perform the grinding, and a finger guard impeller (15) positioned at said unloading opening (14) and having movement organs (16) of the coffee beans, **characterised in that** it couples the impeller (15) by friction with a rotation shaft (10) of the internal grinder (2), activates in rotation said shaft (10) so that, through said friction coupling, said impeller (15) is caused to rotate through an angle of rotation at least sufficient to complete the unloading of the coffee beans by the movement organs (16), and intercepts the impeller (15) upon the completion of said angle of rotation in order to stop its rotation so as to allow the reintegration of coffee beans into the hopper (13) without the risk of them being ejected, also in the event that the reintegration takes place when the rotation shaft (10) of the internal grinder (2) is in rotation.

## Patentansprüche

1. Mahlwerk (1) für eine automatische Kaffeemaschine, umfassend ein internes Mahlwerk (2) und ein externes Mahlwerk (4), getrennt durch einen Spalt (5), einen Trichter (13), ausgestattet mit einer Öffnung (14), um die Kaffeebohnen in den Spalt (5) zu entladen, um das Mahlen durchzuführen, und ein Fingerschutzflügelrad (15), positioniert an der Entladungsöffnung (14), und aufweisend Organe (16) zum Bewegen der Kaffeebohnen, **dadurch gekennzeichnet, dass** Abfangmittel des Flügelrads (15) bereitgestellt sind, die ausgelegt und angeordnet sind, um dessen Rotationswinkel zu begrenzen.

2. Mahlwerk (1) für eine automatische Kaffeemaschine nach dem vorhergehenden Anspruch, **dadurch gekennzeichnet, dass** das Flügelrad (15) ein Abdeckelement (18) der Entladungsöffnung (14) umfasst, aufweisend eine Nabe (19), die auf einer Rotationswelle (10) des internen Mahlwerks (2) befestigt ist.

3. Mahlwerk (1) für eine automatische Kaffeemaschine nach dem vorhergehenden Anspruch, **dadurch gekennzeichnet, dass** die Nabe (19) eine Reibkupplung mit der Rotationswelle (10) aufweist, sodass die Drehung des Flügelrads (15) durch die Rotationswelle (10) bewirkt wird, bis der Wert irgendeiner Bewegung, die der Drehung des Flügelrads (15) entgegenwirkt, unter einer bestimmten Schwelle ist.

4. Mahlwerk (1) für eine automatische Kaffeemaschine nach einem der vorhergehenden Ansprüche, **dadurch gekennzeichnet, dass** die Abfangmittel an der Innenseite des Trichters (13) bereitgestellt sind.

5. Mahlwerk (1) für eine automatische Kaffeemaschine nach dem vorhergehenden Anspruch, **dadurch gekennzeichnet, dass** die Abfangmittel einen Vorsprung (21) im Trichter (13) umfassen, der die Bahn schneidet, die durch eins der Bewegungsorgane (16) vollführt wird, wenn das Flügelrad in Drehung versetzt wird.

6. Mahlwerk (1) für eine automatische Kaffeemaschine nach einem der Ansprüche 4 und 5, **dadurch gekennzeichnet, dass** die Abfangmittel aus einem Stück mit dem Trichter (13) gefertigt sind.

7. Mahlwerk (1) für eine automatische Kaffeemaschine nach einem der Ansprüche 2 bis 6, **dadurch gekennzeichnet, dass** die Bewegungsorgane (16) aus der Seite des Abdeckelements (18) hervorstehen, die der Entladungsöffnung (14) zugewandt ist.

8. Mahlwerk (1) für eine automatische Kaffeemaschine nach einem der Ansprüche 2 bis 7, **dadurch gekennzeichnet, dass** das Abdeckelement (18) eine konische Form aufweist.

9. Mahlwerk (1) für eine automatische Kaffeemaschine nach dem vorhergehenden Anspruch, **dadurch gekennzeichnet, dass** die Bewegungsorgane (16) entlang des Basisumfangs des konischen Abdeckelements (18) positioniert sind.

10. Mahlwerk (1) für eine automatische Kaffeemaschine nach dem vorhergehenden Anspruch, **dadurch gekennzeichnet, dass** die Bewegungsorgane (16) einander entlang des Basisumfangs des konischen Abdeckelements (18) in einem Winkelabstand voneinander folgen, der im Verhältnis zur Achse der Nabe (19) nicht mehr als 90° beträgt.

11. Mahlwerk (1) für eine automatische Kaffeemaschine nach einem der Ansprüche 2 bis 10, **dadurch gekennzeichnet, dass** die Nabe (19) einen Innenflansch (22) aufweist, der an einer Schulter (23) der Rotationswelle (6) anliegt und durch ein elastisches Element (24) festgespannt ist, das in einer umfangseitigen Rille (26) der Rotationswelle (10) im Eingriff ist, um den axialen Rückzug des Flügelrads (15) aus der Rotationswelle (10) zu stoppen.

12. Kaffeemaschine, **dadurch gekennzeichnet, dass** sie ein Mahlwerk (1) nach einem der vorhergehenden Ansprüche umfasst.

13. Aktivierungsmethode für ein Mahlwerk für eine automatische Kaffeemaschine, umfassend ein internes Mahlwerk (2) und ein externes Mahlwerk (4), getrennt durch einen Spalt (5), einen Trichter (13), ausgestattet mit einer Öffnung (14), um die Kaffeebohnen in den Spalt (5) zu entladen, um das Mahlen durchzuführen, und ein Fingerschutzflügelrad (15), positioniert an der Entladungsöffnung (14), und aufweisend Bewegungsorgane (16) der Kaffeebohnen, **dadurch gekennzeichnet, dass** sie das Flügelrad (15) durch Reibung mit einer Rotationswelle (10) des internen Mahlwerks (2) kuppelt, die Welle (10) in Drehung versetzt, sodass das Flügelrad (15) durch die Reibkupplung veranlasst wird, sich um einen Rotationswinkel zu drehen, der mindestens ausreichend ist, um das Entladen der Kaffeebohnen durch die Bewegungsorgane (16) fertigzustellen, das Flügelrad (15) bei Erreichen des Rotationswinkels abfängt, um dessen Drehung zu stoppen, sodass die Ergänzung von Kaffeebohnen im Trichter (13) ermöglicht wird, ohne dass das Risiko besteht, dass diese herausgeworfen werden, auch wenn die Ergänzung stattfindet, wenn die Rotationswelle (10) des internen Mahlwerks (2) in Drehung ist.

## Revendications

1. Moulin (1) pour une machine à café automatique, comprenant un broyeur interne (2) et un broyeur externe (4) séparés par un écart (5), une trémie (13) équipée d'une ouverture (14) pour décharger les grains de café dans ledit écart (5) afin d'effectuer le broyage, et un impulseur protège-doigts (15) positionné en correspondance de ladite ouverture de déchargement (14) et comportant des organes (16) servant à déplacer les grains de café, **caractérisé en ce qu'**il est prévu des moyens d'interception de l'impulseur (15) configurés et disposés pour limiter son angle de rotation.

2. Moulin (1) pour une machine à café automatique selon la revendication précédente, **caractérisé en ce que** ledit impulseur (15) comprend un élément de recouvrement (18) de ladite ouverture de déchargement (14) comportant un moyeu (19) monté sur un arbre de rotation (10) dudit broyeur interne (2).

3. Moulin (1) pour une machine à café automatique selon la revendication précédente, **caractérisé en ce que** ledit moyeu (19) comporte un embrayage à friction avec ledit arbre de rotation (10) de manière à provoquer la rotation de l'impulseur (15) par ledit arbre de rotation (10) jusqu'à ce que la valeur de tout mouvement s'opposant à la rotation de l'impulseur (15) soit inférieure à un certain seuil.

4. Moulin (1) pour une machine à café automatique selon l'une quelconque des revendications précédentes, **caractérisé en ce que** lesdits moyens d'interception sont présents sur le côté interne de ladite trémie (13).

5. Moulin (1) pour une machine à café automatique selon la revendication précédente, **caractérisé en ce que** lesdits moyens d'interception comprennent une saillie (21) dans la trémie (13) qui croise la trajectoire effectuée par l'un desdits organes de déplacement (16) lorsque l'impulseur est activé en rotation.

6. Moulin (1) pour une machine à café automatique selon l'une quelconque des revendications 4 et 5, **caractérisé en ce que** lesdits moyens d'interception sont solidaires de ladite trémie (13).

7. Moulin (1) pour une machine à café automatique selon l'une quelconque des revendications de 2 à 6, **caractérisé en ce que** lesdits organes de déplacement (16) dépassent du côté de l'élément de recouvrement (18) faisant face à ladite ouverture de déchargement (14) .

8. Moulin (1) pour une machine à café automatique selon l'une quelconque des revendications de 2 à 7, **caractérisé en ce que** ledit élément de recouvrement (18) possède une forme conique.

9. Moulin (1) pour une machine à café automatique selon la revendication précédente, **caractérisé en ce que** lesdits organes de déplacement (16) sont positionnés le long du périmètre de la base dudit élément de recouvrement conique (18).

10. Moulin (1) pour une machine à café automatique selon la revendication précédente, **caractérisé en ce que** lesdits organes de déplacement (16) se suivent réciproquement le long du périmètre de la base dudit élément de recouvrement conique (18) à une certaine distance angulaire l'un de l'autre, en rapport à l'axe du moyeu (19), de pas plus de 90°.

11. Moulin (1) pour une machine à café automatique selon l'une quelconque des revendications de 2 à 10, **caractérisé en ce que** ledit moyeu (19) comporte une bride interne (22) reposant sur un épaulement (23) de l'arbre de rotation (6) et bloquée par un élément élastique (24) se mettant en prise dans une rainure périphérique (26) de l'arbre de rotation (10) afin d'arrêter le retrait axial de l'impulseur (15) de l'arbre de rotation (10).

12. Machine à café **caractérisée en ce qu'**elle comprend un moulin (1) selon l'une quelconque des revendications précédentes.

13. Procédé d'activation d'un moulin d'une machine à café comprenant un broyeur interne (2) et un broyeur externe (4) séparés par un écart (5), une trémie (13) équipée d'une ouverture (14) pour décharger les grains de café dans ledit écart (5) afin d'effectuer le broyage, et un impulseur protège-doigts (15) positionné en correspondance de ladite ouverture de déchargement (14) et comportant des organes de déplacement (16) des grains de café, **caractérisé en ce qu'**il accouple l'impulseur (15) par friction à un arbre de rotation (10) du broyeur interne (2), active en rotation ledit arbre (10) de sorte que, à travers ledit embrayage à friction, ledit impulseur (15) soit obligé de tourner selon un angle de rotation au moins suffisant pour achever le déchargement des grains de café par les organes de déplacement (16) et intercepte l'impulseur (15) lors de la réalisation dudit angle de rotation afin d'arrêter sa rotation de manière à permettre la réintégration des grains de café dans la trémie (13) sans risquer de les voir éjectés même lorsque la réintégration se déroule lorsque l'arbre de rotation (10) du broyeur interne (2) est en rotation.
